# FASCICULE DE BREVET EUROPEEN

(11) **EP 2 452 049 B1**
(45) Date de publication et mention de la délivrance du brevet: **12.10.2016**
(21) Numéro de dépôt: 10745307.8
(22) Date de dépôt: 23.06.2010
(51) Int. Cl.: F01D 17/20, F01D 17/22, F02K 1/76

(54) **SYSTÈME D'ACTIONNEMENT POUR ÉLÉMENT MOBILE DE NACELLE DE MOTEUR D'AÉRONEF, TEL QU'UN CAPOT D'INVERSEUR DE POUSSÉE**
BETÄTIGUNGSSYSTEM FÜR EIN BEWEGLICHES TRIEBWERKSGONDELEMENT EINES FLUGZEUGES, WIE ETWA EINEN SCHUBUMKEHRERSCHUTZ
ACTUATING SYSTEM FOR A MOVABLE AIRCRAFT ENGINE NACELLE ELEMENT, SUCH AS A THRUST REVERSER COVER

(30) Priorité: 09.07.2009 FR 0903388
(43) Date de publication de la demande: 16.05.2012
(73) Titulaire: Aircelle, 76700 Gonfreville l'Orcher (FR)
(72) Inventeur: LE COQ, Vincent, Pierre, Germain, F-14600 L A Rivière Saint Sauveur (FR); MORADELL-CASELLAS, Pierre, F-61100 Saint Georges des Groseillers (FR); MAALIOUNE, Hakim, F-78630 Orgeval (FR); DESCAMPS, Alexandre, F-75015 Paris (FR)
(74) Mandataire: Gaillarde, Frédéric F. Ch.
(86) Numéro de dépôt international: PCT/FR2010/051284
(87) Numéro de publication internationale: WO 2011/004095

(56) Documents cités:
- EP-A2- 1 780 394
- EP-A2- 1 978 233
- WO-A1-2006/134253
- GB-A- 598 182

## Description

La présente invention se rapporte à un système d'actionnement pour élément mobile de nacelle de moteur d'aéronef, tel qu'un capot d'inverseur de poussée.

Une nacelle de moteur d'aéronef entoure le moteur et remplit un certain nombre de fonctions, parmi lesquelles la fonction d'inversion de poussée.

Comme cela est connu en soi, cette fonction d'inversion de poussée permet, à l'atterrissage, d'orienter vers l'avant de l'aéronef une partie de la poussée du moteur, et ainsi de réduire la distance de freinage.

Dans un système d'inversion de poussée à grilles, cette modification de l'orientation d'une partie de la poussée est effectuée en faisant coulisser un ou plusieurs éléments formant capot d'inverseur de poussée, permettant ainsi de découvrir des grilles qui défléchissent le flux d'air secondaire (flux froid) du moteur vers l'avant de la nacelle.

Classiquement, l'actionnement de ces éléments formant capot d'inverseur est effectué au moyen d'une pluralité d'actionneurs mécaniques (typiquement du type à vis à billes) ou hydrauliques (du type à pistons) répartis à la périphérie de la nacelle, commandés par un circuit à génération hydraulique connecté au circuit général hydraulique de l'aéronef, ou bien par un circuit à génération électrique connecté au circuit général électrique de l'aéronef.

Par génération hydraulique, on entend, dans le cadre de la présente description, que la source d'énergie est hydraulique, la commande des actionneurs pouvant quant à elle être hydraulique (actionneur hydraulique) ou mécanique (moteur hydraulique agissant sur actionneur mécanique).

De même, par génération électrique, on entend, dans le cadre de la présente invention, que la source d'énergie est électrique, la commande des actionneurs pouvant quant à elle être mécanique (moteur électrique agissant sur un actionneur mécanique) ou hydraulique (moteur électrique agissant sur un moteur hydraulique par l'intermédiaire d'une pompe hydraulique).

Comme cela est connu en soi, ces actionneurs sont reliés cinématiquement entre eux, typiquement par des arbres souples (couramment appelés « flexshafts » dans la terminologie anglo-saxone) dans le cas d'actionneurs mécaniques, de manière que la commande de l'un deux entraîne également la commande des autres. EP 1 780 394 divulgue un dispositif d'actionnement d'inverseur de poussée, comprenant deux sources d'énergie destinées à faire fonctionner des actionneurs, et les sources peuvent être électriques, hydrauliques ou pneumatiques.

La présente invention a notamment pour but de fournir des moyens permettant de pallier une défaillance du circuit à génération hydraulique ou électrique des actionneurs, de manière que la fonction remplie par l'élément actionné ne soit pas affectée.

On atteint ce but de l'invention avec un système d'actionnement d'au moins un élément de nacelle d'aéronef, comprenant au moins deux actionneurs reliés cinématiquement entre eux, un circuit principal à génération hydraulique (respectivement électrique) apte à commander au moins l'un des deux actionneurs, et un circuit secondaire à génération électrique (respectivement hydraulique) apte à commander l'autre actionneur.

Grâce à ces caractéristiques, en cas de panne du circuit principal alimenté par un type d'énergie, le circuit secondaire alimenté par un autre type d'énergie prend le relai, et la connexion cinématique entre les actionneurs rend ce basculement d'un circuit à l'autre indifférent vis-à-vis du déplacement de l'élément de nacelle.

Suivant d'autres caractéristiques optionnelles du système d'actionnement selon l'invention :
- lesdits actionneurs sont mécaniques, ledit circuit principal est à génération hydraulique agissant sur un moteur hydraulique agissant sur l'un des actionneurs et ledit circuit secondaire est à génération électrique comprenant un moteur électrique agissant sur une pompe hydraulique agissant elle-même sur un moteur hydraulique agissant sur un autre actionneur,
- lesdits actionneurs sont mécaniques, ledit circuit principal est à génération hydraulique agissant sur un moteur hydraulique agissant sur l'un des actionneurs, et ledit circuit secondaire est à génération électrique comprenant un moteur électrique agissant directement sur un autre actionneur,
- lesdits actionneurs sont mécaniques, ledit circuit principal est à génération électrique comprenant un moteur électrique agissant directement sur un actionneur et ledit circuit secondaire est à génération hydraulique agissant sur un moteur hydraulique agissant sur un autre actionneur,
- lesdits actionneurs sont hydrauliques, ledit circuit principal est à génération hydraulique agissant directement sur l'un des actionneurs et ledit circuit secondaire est à génération électrique comprenant un moteur électrique agissant sur une pompe hydraulique agissant directement sur un autre actionneur,
- lesdits actionneurs sont hydrauliques, ledit circuit principal est à génération électrique agissant sur une pompe hydraulique agissant elle-même sur l'un des actionneurs et ledit circuit secondaire est à génération hydraulique agissant directement sur un autre actionneur,
- ledit système comprend trois actionneurs reliés entre eux cinématiquement, ledit circuit principal à génération hydraulique (respectivement électrique) et ledit circuit secondaire à génération électrique (respectivement hydraulique) étant respectivement reliés aux deux actionneurs d'extrémité de la chaîne cinématique formée par les trois actionneurs : grâce à ces caractéristiques, en cas de rupture des moyens de transmission cinématique (« flexshafts » par exemple dans le cas d'actionneurs mécaniques) entre deux actionneurs, on peut continuer à faire fonctionner les trois actionneurs en utilisant à la fois le circuit principal et le circuit secondaire.

D'autres caractéristiques et avantages de la présente invention apparaîtront à la lumière de la description qui va suivre, et à l'examen des figures ci-annexées, dans lesquelles :
- la figure 1 représente, de manière schématique, le circuit de commande d'un premier mode de réalisation du système selon l'invention, et
- la figure 2 représente de manière schématique un deuxième mode de réalisation de ce système.

Sur ces deux figures, on utilise les symboles couramment utilisés en matière de circuits hydrauliques.

Sur ces deux figures, des références identiques ou analogues désignent des ensembles d'organes identiques ou analogues.

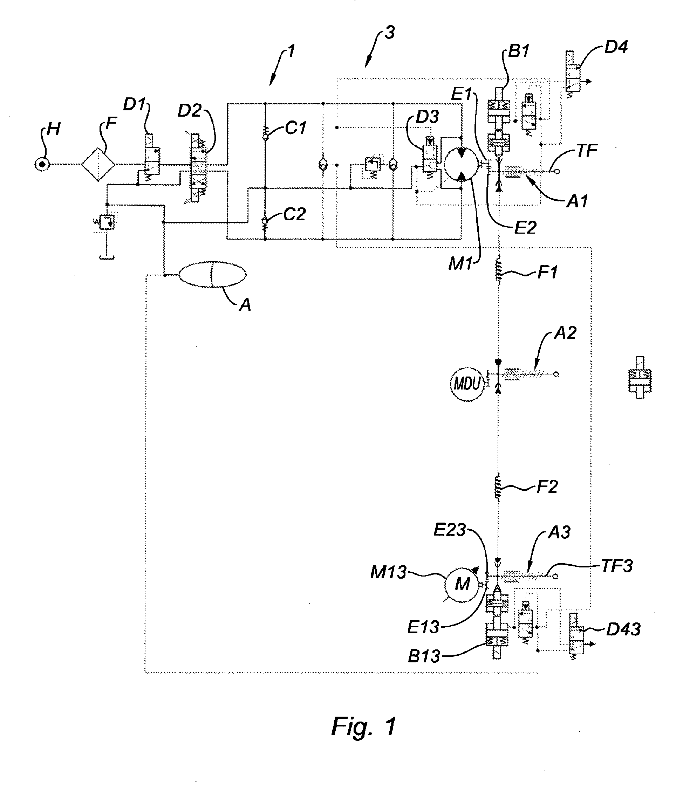

En se reportant à la figure 1, on a représenté trois actionneurs mécaniques A1, A2, A3, du type à vis à billes, connus en soi : de tels actionneurs permettent d'obtenir la translation d'une tige filetée, à partir de la mise en rotation de cette tige à l'intérieur d'un filetage fixe.

Les trois actionneurs A1, A2, A3 sont particulièrement destinés à faire coulisser le capot d'un inverseur de poussée à grilles (non représenté), équipant une nacelle d'aéronef.

Dans ce cas, les trois actionneurs A1, A2, A3 sont espacés angulairement de manière régulière à la périphérie de la nacelle, de manière à permettre une répartition équilibrée des efforts d'actionnement du capot d'inverseur.

Ces trois actionneurs A1, A2, A3 sont reliés entre eux par des arbres de transmission souples, couramment appelés « flexshafts », permettant un entraînement mutuel des tiges filetées rotatives de ces actionneurs.

Plus précisément, comme cela est représenté sur la figure 1, un premier arbre de transmission souple F1 connecte le premier actionneur A1 au deuxième actionneur A2, et un deuxième arbre de transmission souple F2 connecte le deuxième actionneur A2 au troisième actionneur A3.

On a représenté sur la figure 1 un circuit hydraulique 1 de commande du premier actionneur A1.

Ce circuit hydraulique 1, représenté en traits continus, est dit à génération hydraulique, en ce sens qu'il prend sa source de pression hydraulique H sur le circuit hydraulique principal de l'aéronef.

Ce circuit hydraulique 1 est classique, et sera pour cette raison décrit très rapidement.

Comme on peut le voir sur la figure 1, ce circuit hydraulique 1 comprend un filtre F, trois distributeurs D1, D2, D3, deux clapets anti-retour tarés C1, C2, un accumulateur A, l'ensemble de ces éléments étant connectés hydrauliquement entre eux de manière à permettre l'actionnement sélectif, et dans un sens ou dans un autre, d'un moteur hydraulique à cylindrée fixe et à double sens de rotation M1.

Ce moteur M1 comporte à sa sortie un engrenage E1 coopérant avec l'engrenage E2 de la tige filetée rotative TF du premier actionneur A1.

Le circuit hydraulique de commande 1 est par ailleurs connecté à un circuit électronique de freinage 3, représenté en pointillés, permettant d'agir de manière sélective sur un frein D1, permettant de freiner la rotation de la tige filetée TF de l'actionneur A1.

Ce circuit de freinage 3 comporte par ailleurs un distributeur 4 permettant d'agir de manière sélective sur un pion de verrouillage de l'actionneur A1, (système de verrouillage primaire ou « primary locking system »), permettant de sécuriser la position fermée du capot d'inversion de poussée.

On notera que le circuit de freinage 3 permet également d'agir sur le troisième actionneur A3, par l'intermédiaire d'éléments analogues à ceux de l'actionneur A1, ces éléments étant désignés par des références analogues à celles concernant le premier actionneur A1, mais terminées par le chiffre 3 : B13, D43, E13, E23.

De manière remarquable selon l'invention, on peut remarquer que le pignon d'entrée E23 de la tige filetée TF3 est entraînée par un pignon E13 monté sur l'arbre de sortie d'un moteur électrique de type « brushless » M13.

On peut donc dire que la commande du troisième actionneur A3 est à génération électrique en ce sens que la source d'énergie permettant le fonctionnement de cet actionneur est électrique.

Le mode de fonctionnement et les avantages du mode de réalisation qui vient d'être décrit sont les suivants.

En mode de fonctionnement normal, pour faire fonctionner les trois actionneurs A1, A2, A3, on utilise à la fois le circuit hydraulique 1 et le moteur électrique M13, permettant d'agir respectivement sur le premier actionneur A1 et sur le troisième actionneur A3, le fonctionnement du deuxième actionneur central A2 étant quant à lui assuré par les arbres de transmission souples F1, F2.

Comme cela est connu en soi, avant toute opération d'ouverture du capot d'inverseur de poussée, on commence par déverrouiller les verrous primaires D4 et D43 au moyen du circuit 3, et pendant le déplacement du capot d'inverseur de poussée, on agit selon des stratégies bien déterminées au moyen du circuit de freinage 3 sur les freins D1 et D13, de manière à contrôler avec précision le déplacement du capot d'inverseur de poussée.

En cas de problème sur la source de pression hydraulique principale de l'aéronef, le fonctionnement du circuit hydraulique 1 peut s'avérer défectueux.

Dans ce cas, le fonctionnement du moteur électrique M13 permet de palier cette panne, en ce sens que ce moteur, dont la source d'énergie est électrique et donc clairement distincte de la source d'énergie hydraulique de l'aéronef, peut entraîner non seulement le troisième actionneur A3, mais également les premier et deuxième actionneurs A1 et A2 par l'intermédiaire des arbres de transmission souples F1 et F2.

On comprend donc que le système selon l'invention permet de conserver un mode de fonctionnement normal des actionneurs en dépit d'une panne importante sur le circuit hydraulique principal de l'aéronef : ce système est donc très sécuritaire.

Par ailleurs, du fait de l'entraînement des actionneurs d'extrémité A1, A3 chacun par une motorisation propre, on peut faire face à la rupture d'un arbre de transmission souple F1 ou F2.

Dans un tel cas en effet, l'arbre de transmission souple restant continue d'entraîner l'actionneur central A2, et on obtient donc de la sorte une continuité du fonctionnement des trois actionneurs.

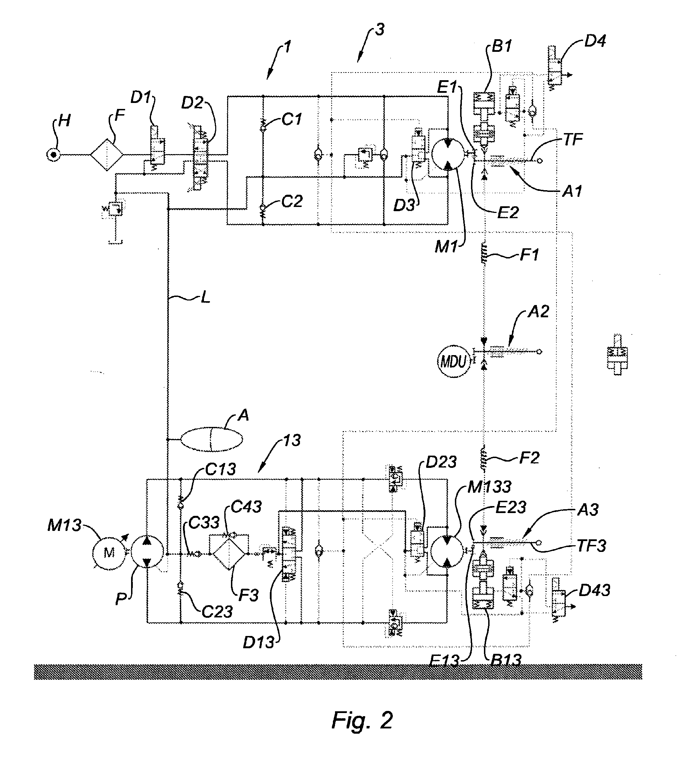

On se reporte à présent sur la figure 2, sur laquelle on a représenté un autre mode de réalisation du système selon l'invention.

Comme on peut le voir sur cette figure 2, les circuits hydrauliques de commande 1 et de freinage 3 du premier actionneur A1 sont identiques à ceux du premier mode de réalisation, et ne seront pour cette raison pas à nouveau décrits.

La différence réside dans les moyens de commande du troisième actionneur A3.

A la différence du précédent mode de réalisation dans lequel la commande de ce troisième actionneur A3 était réalisée directement par un moteur électrique, dans le présent cas d'espèce, cette commande est assurée par un moteur hydraulique M133 analogue au moteur hydraulique M1 (c'est-à-dire à cylindrée fixe et à double sens de rotation), ce moteur hydraulique M133 étant alimenté par un circuit hydraulique 13 comprenant une pompe P à cylindrée fixe entraînée par un moteur électrique « brushless » M13 analogue à celui du mode de réalisation précédent.

Le circuit hydraulique13 consiste essentiellement en une boucle hydrostatique, largement utilisée dans d'autres application industrielles, telles que le levage : ce circuit hydraulique 13 comporte notamment une pluralité de clapets anti-retour tarés C13, C23, C33, C43, un filtre F3, et deux distributeurs D13, D23.

Comme on peur donc le comprendre, dans ce deuxième mode de réalisation, le fonctionnement du troisième actionneur mécanique A3 est assuré par un circuit hydraulique 13 dont la source de pression est à génération électrique : cette pression est obtenue en effet au moyen d'un moteur électrique M13 totalement indépendant de la source de pression H du circuit hydraulique principal de l'aéronef.

Ainsi, comme dans le cas précédent, en cas de panne du circuit hydraulique principal de l'aéronef, le circuit hydraulique 13 de secours peut continuer à fonctionner de manière autonome, au moyen de la source d'énergie électrique alimentant le moteur M13.

Comme dans le cas précédent, en mode de fonctionnement normal, tant le circuit hydraulique principal 1 que le circuit hydraulique de secours 13 sont en fonctionnement, de sorte qu'il y a redondance.

On peut envisager une liaison hydraulique L entre ces deux circuits, de sorte qu'en cas de panne du circuit hydraulique principal de l'aéronef, la pompe P puisse alimenter non seulement le circuit de secours 13, mais également le circuit principal 1.

Comme on l'aura donc compris à la lumière de la description qui précède, l'invention fournit, grâce à des sources d'énergie indépendantes, un système permettant de palier une panne sur le circuit hydraulique principal de l'aéronef.

Bien entendu, la présente invention n'est nullement limitée aux modes de réalisation décrits et représentés.

C'est ainsi également que l'on pourrait envisager d'appliquer l'invention à des systèmes dans lesquels :
- les actionneurs sont mécaniques, le circuit principal est à génération électrique comprenant un moteur électrique agissant directement sur un actionneur et le circuit secondaire est à génération hydraulique agissant sur un moteur hydraulique agissant sur un autre actionneur,
- les actionneurs sont hydrauliques, le circuit principal est à génération hydraulique agissant directement sur l'un des actionneurs et le circuit secondaire est à génération électrique comprenant un moteur électrique agissant sur une pompe hydraulique agissant directement sur un autre actionneur,
- les actionneurs sont hydrauliques, le circuit principal est à génération électrique agissant sur une pompe hydraulique agissant elle-même sur l'un des actionneurs et le circuit secondaire est à génération hydraulique agissant directement sur un autre actionneur.

Les préceptes de la présente invention sont applicables bien entendu à l'actionnement d'un capot d'inverseur de poussée, mais plus généralement à l'actionnement de tous types d'éléments mobiles sur une nacelle d'aéronef.

L'invention trouve une application particulière pour le fonctionnement des actionneurs doubles, c'est-à-dire des actionneurs comprenant une tige permettant d'actionner un premier élément mobile, et une deuxième tige montée télescopique sur la première, permettant d'actionner simultanément un deuxième élément mobile.

Une telle application spécifique est utile notamment pour l'actionnement combiné d'un capot d'inverseur de poussée et de la partie aval de celui-ci formant tuyère à section variable (VFN ou « variable fan nozzle») : une telle configuration est connue notamment du document de l'état de la technique GB 2 446 441.

On notera enfin que la présente invention a été décrite dans le cadre particulier de l'utilisation de trois actionneurs, mais est bien entendu généralisable à deux actionneurs, ou à plus de trois actionneurs.

## Revendications

1. Système d'actionnement d'au moins un élément de nacelle d'aéronef, comprenant au moins deux actionneurs (A1, A2, A3) reliés cinématiquement entre eux, un circuit principal (1) à génération hydraulique (respectivement électrique) apte à commander au moins l'un (A1) des deux actionneurs, et un circuit secondaire (13) à génération électrique (respectivement hydraulique) apte à commander l'autre actionneur (A3).

2. Système selon la revendication 1, dans lequel lesdits actionneurs (A1, A2, A3) sont mécaniques, ledit circuit principal (1) est à génération hydraulique agissant sur un moteur hydraulique (M1) agissant sur l'un (A1) des actionneurs et ledit circuit secondaire (13) est à génération électrique comprenant un moteur électrique (M13) agissant sur une pompe hydraulique (P) agissant elle-même sur un moteur hydraulique (M133) agissant sur un autre actionneur (A3).

3. Système selon la revendication 1, dans lequel lesdits actionneurs (A1, A2, A3) sont mécaniques, ledit circuit principal (1) est à génération hydraulique agissant sur un moteur hydraulique (M1) agissant sur l'un des actionneurs (A1), et ledit circuit secondaire (13) est à génération électrique comprenant un moteur électrique (M13) agissant directement sur un autre actionneur (A3).

4. Système selon la revendication 1, dans lequel lesdits actionneurs sont mécaniques, ledit circuit principal est à génération électrique comprenant un moteur électrique agissant directement sur un actionneur et ledit circuit secondaire est à génération hydraulique agissant sur un moteur hydraulique agissant sur un autre actionneur.

5. Système selon la revendication 1, dans lequel lesdits actionneurs sont hydrauliques, ledit circuit principal est à génération hydraulique agissant directement sur l'un des actionneurs et ledit circuit secondaire est à génération électrique comprenant un moteur électrique agissant sur une pompe hydraulique agissant directement sur un autre actionneur.

6. Système selon la revendication 1, dans lequel lesdits actionneurs sont hydrauliques, ledit circuit principal est à génération électrique agissant sur une pompe hydraulique agissant elle-même sur l'un des actionneurs et ledit circuit secondaire est à génération hydraulique agissant directement sur un autre actionneur.

7. Système selon l'une quelconque des revendications précédentes, comprenant trois actionneurs (A1, A2, A3) reliés entre eux cinématiquement, ledit circuit principal (1) à génération hydraulique (respectivement électrique) et ledit circuit secondaire (13) à génération électrique (respectivement hydraulique) étant respectivement reliés aux deux actionneurs d'extrémité (A1, A3) de la chaîne cinématique formée par les trois actionneurs (A1, A2, A3).

## Patentansprüche

1. System zum Betätigen zumindest eines Gondelelements eines Luftfahrzeugs, zumindest zwei Stellorgane (A1, A2, A3) umfassend, die kinematisch miteinander verbunden sind, einen Hauptkreis (1) mit hydraulischer Energie (bzw. elektrischer Energie), der imstande ist, zumindest den eines (A1) der beiden Stellorgane anzusteuern, und einen Sekundärkreis (13) mit elektrischer Energie (bzw. hydraulischer Energie), der imstande ist, das andere Stellorgan (A3) anzusteuern.

2. System nach Anspruch 1, wobei die besagten Stellorgane (A1, A2, A3) mechanisch sind, der besagte Hauptkreis (1) hydraulische Energie liefert, die auf einen Hydraulikmotor (M1) einwirkt, der auf das eine (A1) der Stellorgane einwirkt, und der besagte Sekundärkreis (13) elektrische Energie liefert, einen Elektromotor (M13) umfassend, der auf eine Hydraulikpumpe (P) einwirkt, die selbst wiederum auf einen Hydraulikmotor (M133) einwirkt, der auf ein anderes Stellorgan (A3) einwirkt.

3. System nach Anspruch 1, wobei die besagten Stellorgane (A1, A2, A3) mechanisch sind, der besagte Hauptkreis (1) hydraulische Energie liefert, die auf einen Hydraulikmotor (M1) einwirkt, der auf das eine (A1) der Stellorgane einwirkt, und der besagte Sekundärkreis (13) elektrische Energie liefert, einen Elektromotor (M13) umfassend, der direkt auf ein anderes Stellorgan (A3) einwirkt.

4. System nach Anspruch 1, wobei die besagten Stellorgane mechanisch sind, wobei der besagte Hauptkreis elektrische Energie liefert, einen Elektromotor umfassend, der direkt auf ein Stellorgan einwirkt und der Sekundärkreis hydraulische Energie liefert, die auf einen Hydraulikmotor einwirkt, der auf ein anderes Stellorgan einwirkt.

5. System nach Anspruch 1, wobei die besagten Stellorgane hydraulisch sind, der besagte Hauptkreis hydraulische Energie liefert, die direkt auf ein Stellorgan einwirkt, und der besagte Sekundärkreis elektrische Energie liefert, einen Elektromotor umfassend, der auf eine Hydraulikpumpe einwirkt, die direkt auf ein anderes Stellorgan einwirkt.

6. System nach Anspruch 1, wobei die besagten Stellorgane hydraulisch sind, der besagte Hauptkreis elektrische Energie liefert, die auf eine Hydraulikpumpe einwirkt, die selbst wiederum auf eines der Stellorgane einwirkt und der besagte Sekundärkreis hydraulische Energie liefert, die direkt auf ein anderes Stellorgan einwirkt.

7. System nach einem der vorherigen Ansprüche, drei Stellorgane (A1, A2, A3) umfassend, die kinematisch miteinander verbunden sind, wobei der besagte Hauptkreis (1) mit hydraulischer Energie (bzw. elektrischer Energie) und der besagte Sekundärkreis (13) mit elektrischer Energie (bzw. hydraulischer Energie) jeweils mit den beiden Stellorganen am Ende (A1, A3) der kinematischen Kette verbunden sind, die durch die drei Stellorgane (A1, A2, A3) gebildet wird.

## Claims

1. A system for actuating at least one element of an aircraft nacelle, comprising at least two actuators (A1, A2, A3) kinematically connected to each other, a hydraulically-powered (respectively electrically-powered) main circuit (1) capable of controlling at least one (A1) of the two actuators, and an electrically-powered (respectively hydraulically-powered) secondary circuit (13) capable of controlling the other actuator (A3).

2. The system according to claim 1, wherein said actuators (A1, A2, A3) are mechanical, said main circuit (1) is hydraulically-powered acting on a hydraulic motor (M1) acting on one (A1) of the actuators and said secondary circuit (13) is electrically-powered comprising an electric motor (M13) acting on a hydraulic pump (P) acting, in turn, on a hydraulic motor (M133) acting on another actuator (A3).

3. The system according to claim 1, wherein said actuators (A1, A2, A3) are mechanical, said main circuit (1) is hydraulically-powered acting on a hydraulic motor (M1) acting on one of the actuators (A1), and said secondary circuit (13) is electrically-powered comprising an electric motor (M13) acting directly on another actuator (A3).

4. The system according to claim 1, wherein said actuators are mechanical, said main circuit is electrically-powered comprising an electric motor acting directly on an actuator and said secondary circuit is hydraulically-powered acting on a hydraulic motor acting on another actuator.

5. The system according to claim 1, wherein said actuators are hydraulic, said main circuit is hydraulically-powered acting directly on one of the actuators and said secondary circuit is electrically-powered comprising an electric motor acting on a hydraulic pump acting directly on another actuator.

6. The system according to claim 1, wherein said actuators are hydraulic, said main circuit is electrically-powered acting on a hydraulic pump acting, in turn, on one of the actuators and said secondary circuit is hydraulically-powered acting directly on another actuator.

7. The system according to any one of the preceding claims, comprising three actuators (A1, A2, A3) kinematically connected to each other, said hydraulically-powered (respectively electrically-powered) main circuit (1) and said electrically-powered (respectively hydraulically-powered) secondary circuit (13) being respectively connected to the two end actuators (A1, A3) of the drive train formed by the three actuators (A1, A2, A3).
